# EUROPÄISCHE PATENTSCHRIFT

(11) **EP 0 717 224 B1**
(45) Veröffentlichungstag und Bekanntmachung des Hinweises auf die Patenterteilung: **15.03.2000**
(21) Anmeldenummer: 95810796.3
(22) Anmeldetag: 14.12.1995
(51) Int. Cl.: F16L 3/10

(54) **Rohrhalter**
Pipe support clamp
Support de tuyau

(30) Priorität: 15.12.1994 CH 379894
(43) Veröffentlichungstag der Anmeldung: 19.06.1996
(73) Patentinhaber: Strub, Manfred, 3250 Lyss (CH)
(72) Erfinder: Strub, Manfred, 3250 Lyss (CH)
(74) Vertreter: Roshardt, Werner Alfred, Dipl.-Phys.

(56) Entgegenhaltungen:
- CH-A- 250 452
- DE-A- 3 533 951
- DE-U- 9 109 365
- DE-U- 9 403 136
- FR-A- 2 420 279

## Beschreibung

Die Erfindung betrifft eine Vorrichtung gemäß dem Oberbegriff des Patentanspruchs 1 sowie ein Verfahren zu dessen Herstellung gemäß dem Oberbegriff des Patentanspruchs 6.

Rohrhalter, insbesondere für Dachablaufrohre, dienen dazu, diese bevorzugt in einer vertikalen Lage an einer Hauswand zu halten, wobei eine Rohrschelle fest mit der Hauswand verbunden ist, während eine zweite an dieser ausklappbar angeordnet ist, um das Ablaufrohr einlegen und bei zugeklappter Rohrschelle halten zu können.

Aus der DE-A 35 33 951 ist ein Rohrhalter bekannt, bei dem die gebogenen Endbereiche der aus Blechstreifen bestehenden Schellenbacken die beiden Teile eines Schwenkscharniers bilden. Der eine Endbereich weist zwei seitliche Laschen auf, die einen kreiszylindrischen Hohlraum (Scharnieröse) umschließend, gebogen sind. Die Hohlraumachse bildet die Schwenkachse. Der andere Endbereich hat durch beidseitiges Ausstanzen ein senkrecht zur Blechstreifenausdehnung quer verlaufendes Querstück. Der Endbereich ist T-förmig ausgebildet (gedrungenes T). Das Querstück ist nach außen abgekantet. Bei geschlossener Rohrschelle läuft dieses Querstück durch die Mittelachse des die Scharnieröse bildenden Hohlraums. Die Breite des Querstücks entspricht bis auf eine Spieltoleranz dem Durchmesser der Scharnieröse. Das Querstück dient dem Schwenkscharnier als Scharnierbolzen. Analog ist auch das Schwenkscharnier der in der DE-U 94 03 136.3 beschriebenen Rohrschelle ausgebildet.

Diese Rohrschelle liegt nur teilweise am Rohrmantel auf. Um ein gegen Abrutschen gesichertes Halten des Ablaufrohres in dieser Schelle zu erreichen, mußten, wie in der CH-A 250 452, insbesondere in deren Figur 1 dargestellt ist, Keile zwischen Schellenbakkeninnenseite und dem Rohrmantel eingelegt werden. Auch wurden elastische Manschetten o. ä. verwendet.

Ebenfalls eine Ausbildung eines Achsbolzens durch Verformung der Endbereiche der Schellenbacken lehrt die FR-A 2 420 279. Das eine Schellenbackenende wird zu einem Rohr mit kreisförmigem Durchmesser aufgerollt (=Achsbolzen). Die Rohrwandung weist eine Öffnung auf, durch die dann eine rundgebogene Lasche greift, deren Biegeradius dem Rohraußendurchmesser angepaßt ist. Werden die Schellenbacken vollständig geöffnet, können die Backen auseinander genommen werden. Eine hierzu analoge Ausbildung ist in der CH-A 322 006 beschrieben.

Die CH-A 250 452 zeigt entweder Rohrhalter mit Schellenbacken, welche trennbar über ein Verhaken miteinander verbunden sind, oder an den Schellenbackenenden als Scharnier eine Scharnierachsennachbildung haben.

Auch bei den Rohrschellen der DE-U 91 09 365.1 und der FR-A 2 420 279 liegen die Schellenbackeninnenseiten im geschlossenen Zustand der Schelle nur teilweise am Rohrmantel an. Um einen sicheren Halt zu erhalten, müssen auch hier wieder Keile o.ä. eingelegt werden oder die Schellenbacken mit einem derartigen Kraftaufwand zusammengezogen werden, daß sich Backen und Rohrmantel durch eine mechanische Verformung (verbiegen) aneinander anpassen. Auch wurde ein nur teilweises Anliegen einfach in Kauf genommen.

Bei den bekannten Rohrschellen, sofern sie überhaupt ein Schwenkscharnier aufweisen, wurde versucht, Bauelemente einzusparen. Es wurde der üblicherweise als Schwenkachse dienende Bolzen durch ein analoges direkt an die Backen in einem Biegevorgang anzuformendes entsprechendes, annähernd ebenes, plattenförmiges, eine Achsenfunktion übernehmendes Blechteil ersetzt. Bei einer in der DE-U 91 09365.1 beschriebenen Rohrschelle ging man in der Nachahmung des aus Blech gebogenen Bolzenersatzes sogar so weit, auch noch das Querstück parallel in Achsenrichtung halbkreisförmig zu biegen.

Diese Rohrschellenbacken ließen sich aus Blechstreifen durch Biegevorgänge relativ preisgünstig herstellen. Der Schließvorgang der Backen konnte jedoch durch ein Verhaken im Scharnier behindert werden; auch war das klemmende Halten des Rohres nicht zufriedenstellend.

Die Aufgabe der Erfindung ist es, einen einfach herzustellenden und sicher auf- und zuklappbaren Rohrhalter, der ein einwandfreies Halten des Rohres insbesondere mit einem ansprechenden Aussehen für einen Beobachter gestattet, sowie ein Verfahren zu seiner Herstellung zu schaffen.

Die Erfindung löst die gestellte Aufgabe mit den Merkmalen der Ansprüche 1 bzw. 6 durch eine entsprechend starke Abbiegung des Gegenhalteteils nach außen. Hierdurch liegen im geschlossenen Zustand des Halters deren Backen bis auf winzigste Bereiche vollständig und satt am Rohrmantel an, wodurch sich ein einwandfreies Halten ergibt. Dieses satte Anliegen ergibt nicht nur eine ausgezeichnete Fixierung, sondern ein ansprechendes Aussehen für einen Betrachter. Die ganze Halterung sieht einfach nach "guter Handwerksarbeit" aus. Sie wird deshalb vom Handwerker wie auch vom Kunden geschätzt.

Die Erfindung löst die Aufgabe auch noch dadurch, daß nicht mehr versucht wird, ein "landläufiges" Scharnier aus einer Scharnierachse und diese umgreifenden Ösen nachzubilden. Es ist zwar auch bei der Erfindung wenigstens eine Öse vorhanden. Die Ösenwand rutscht jetzt jedoch in einem Schlitz im Endbereich der anderen Backe. Die Erfindung verzichtet auf jegliches mechanisches Element im Scharnier, welches die mechanische Achsenfunktion nachahmen bzw. nachempfinden würde. Eine mechanische Achse im eigentlichen Sinn ist nicht mehr vorhanden. Da nun dieser Schlitz für den Schwenkvorgang verantwortlich ist, kann auch ein Verhaken durch einen nicht vorhandenen plattenförmigen "Bolzenersatz" nicht mehr erfolgen.

Wie unten beschrieben, ist der erfindungsgemäße Rohrhalter durch einen einfachen Stanz- und Biegevorgang herstellbar. Anstelle von Stanzen kann selbstverständlich auch ausgeschnitten werden.

Im folgenden werden Beispiele des erfindungsgemäßen Rohrhalters sowie dessen Herstellungsverfahren anhand von Zeichnungen näher erläutert. Weitere Vorteile der Erfindung ergeben sich zusätzlich aus der nachfolgenden Beschreibung. Es zeigen:
- Fig. 1: einen Rohrhalter in perspektivischer Darstellung,
- Fig. 2: eine Draufsicht auf die Endbereiche der beiden Rohrschellenbacken vor deren Biegen und der Formung des Rohrhalterscharniers,
- Fig. 3: eine Seitenansicht des in einem ersten Verfahrensschritt aufgebogenen Endteils der einen Rohrschellenbacke,
- Fig. 4: eine Seitenansicht des in einem weiteren Verfahrensschritt kreissegmentförmig gebogenen Endteils der anderen Rohrschellenbacke,
- Fig. 5: eine Seitenansicht der beiden zusammengesteckten, gemäß **Figur 3** und **4** gebogenen Endbereiche der beiden Rohrschellenbacken vor dem letzten Biegevorgang zur Scharnierbildung,
- Fig. 6: eine Draufsicht analog zu **Figur 2** auf eine Variante der Endbereiche und
- Fig. 7: eine Draufsicht in vergrößerter Darstellung auf das Schwenkscharnier des Rohrhalters in der in **Fig. 1** angedeuteten **Blickrichtung VII**, wobei hier der Rohrhalter um ein zu haltendes Rohr gelegt gezeigt ist, um sein sattes Aufliegen am Rohrmantel darzustellen.

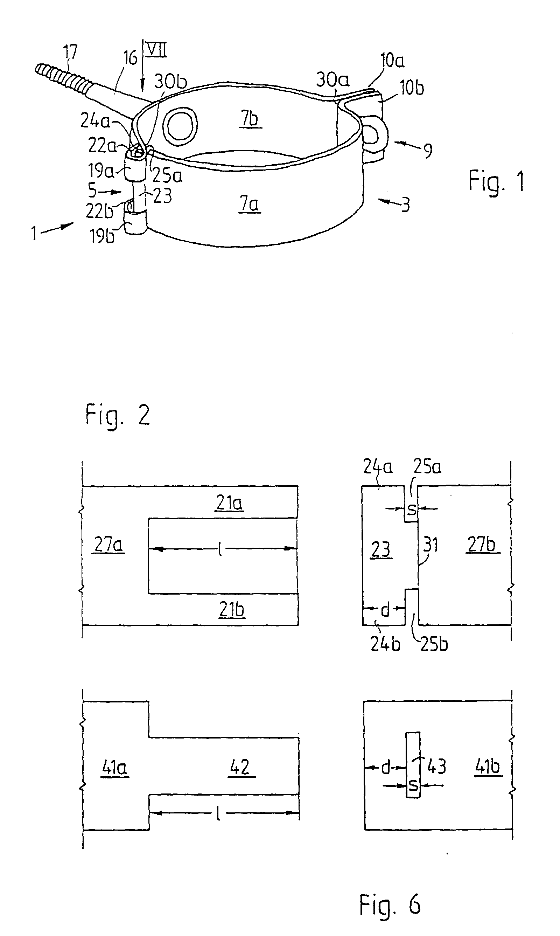

Der in **Figur 1** ohne Dachablaufrohr 2 dargestellte Rohrhalter **1** hat eine aufklappbare Rohrschelle **3** mit zwei mittels einem Schwenkscharnier **5** schwenkbar gehaltenen, halbkreisförmig aus einem Blechstreifen gebogenen ersten und zweiten Rohrschellenbacken **7a** und **7b,** welche mittels einer Ringschraube **9** in ihrem flanschartigen vorderen Teil **10a** bzw. **10b** zusammengehalten bzw. -gezogen werden. In der Mitte des ersten Schellenteils **7a** ist ein Befestigungsorgan **16** mit einem Holzgewinde **17** für eine Wandbefestigung eingepreßt.

Das Scharnier **5** wird nur durch Ausstanzen der Endbereiche der Rohrschellenbacken **7a** und **7b** und anschließende Biegearbeiten ohne Hinzufügen weiterer Bauteile geformt. Es ist aus einem als Gegenhalter wirkenden Endbereich **23** (Querstück) der zweiten Rohrschellenbacke **7b**, der vollständig seitlich von den Endbereichen **19a** und **19b** der ersten Rohrschellenbacke **7a** umschlossen wird, gebildet. Es können auch gegenüber diesem Beispiel unterschiedliche Anzahlen von Endbereichen verwendet werden. Die Summe aus der Anzahl der Endbereiche der einen Backe plus denjenigen der anderen Backe muß jedoch immer eine ungerade Zahl ergeben.

Die ersten und zweiten, das Scharnier 5 bildenden Endbereiche **19a, 19b** und **23** sind untrennbar miteinander verbunden und können sich auch beim Schwenkvorgang nicht verhaken. Es sind hier zwei erste Endbereiche **19a** und **19b** vorhanden. Die ersten Endbereiche **19a** und **19b** sind aus je einer seitlichen Lasche **21a** bzw. **21b** zu einem unten und oben offenen Zylinder gebogen. Der Zylinderquerschnitt ist nur in einer groben Näherung kreisförmig; die Abweichungen hiervon werden unten erläutert.

Durch die zylindrischen Innenräume **22a** und **22b** der beiden Endbereiche **19a** und **19b** greifen die beiden Endteile **24a** und **24b** des Querstücks **23** eines T-förmigen Endbereichs, welches durch je einen oberen und unteren Schlitz **25a** und **25b** vom Rest der Rohrschellenbacke **7a** abgesondert ist. Das Querstück **23** ist gegenüber dem anschließenden Schellenbackenrestteil nach außen um einen Winkel α zwischen 30° und 70°, bevorzugt um einem Winkel α zwischen 35° und 55°, hier um etwa 45° gebogen. Durch diese Abbiegung ist im geschlossenen Zustand des Rohrhalters **1** ein dessen Querschnitt entsprechendes Rohr **2** paßgenau ohne zwischen der Schellenbackeninnenseite und dem Rohrmantel **29** einbringbarem Zusatzelement halterbar und einklemmbar. Die geometrische Längsachse **26** der Innenräume **22a** und **22b** verläuft annähernd senkrecht zur Längsausdehnung des später die Rohrschellenbacke **7b** bildenden Blechstreifens **27a.**

Die beiden Schlitze **25a** und **25b** sind in den **Figuren 1** und **2** dargestellt. Durch diese beiden Schlitze **25a** und **25b** greifen die beiden Endbereiche **19a** und **19b**. Die in den Endbereichen **19a** und **19b** steckenden Teile **24a** und **24b** des Querstücks **23** bilden ein Gegenhalteteil im Schwenkscharnier **5**. Im Innenraum (Freiraum) **22a** bzw. **22b** jedes Endbereichs **19a** bzw. **19b** bewegt sich das Querstück **23** bzw. die Querstücke ungehindert. Das einfache Schwenkscharnier **5** ist fertig. Eine eigentliche hardwaremäßige Achse gibt es nicht mehr. Die Breite **d** des Querstücks **23** ist um eine erste Toleranz kleiner als der Durchmesser jedes Innenraums **22a** bzw. **22b**.

Die erste Toleranz ist derart gewählt, daß die Breite d des Querstücks **23** immer wesentlich kleiner ist als der Durchmesser der aus den Laschen **21a** und **21b** gebogenen Innenräume **22a** und **22b.** Die Breite s der Schlitze **25a** und **25b** ist um eine zweite Toleranz geringfügig größer als die Blechstärke des später die Rohrschellenbacke **7a** bildenden Blechstreifens **27a**. Die zweite Toleranz ist sorgfältig auszuwählen und zu erproben, da sie für die Führung der Rohrschellenbacke **7a** an den Wänden der Endbereiche **19a** und **19b** beim Schwenkscharnier **5** verantwortlich ist. Wird die Schlitzbreite **s** zu groß gewählt, wackeln ("lottern") die beiden Rohrschellenbacken **7a** und **7b.** Wird sie zu klein gewählt, ergibt sich ein Klemmen und die beiden Rohrschellenbacken **7a** und **7b**. Sie können dann nur schlecht auf- und zugeschwenkt werden.

Die erste Toleranz ist weniger kritisch. Wird die Breite **b** des Querstücks **23** zu groß gewählt, ist ein einwandfreies Schwenken der Rohrschellenbacken **7a** und **7b** nicht gewährleistet. Die Breite **d** kann jedoch nahezu beliebig klein gewählt werden, sie wird nur durch die dann noch verbleibende, die mechanische Stabilität ausmachende Materialstärke begrenzt, da das Querstück **23** ja als Gegenhalteteil zu wirken hat und nicht "ausreißen" darf.

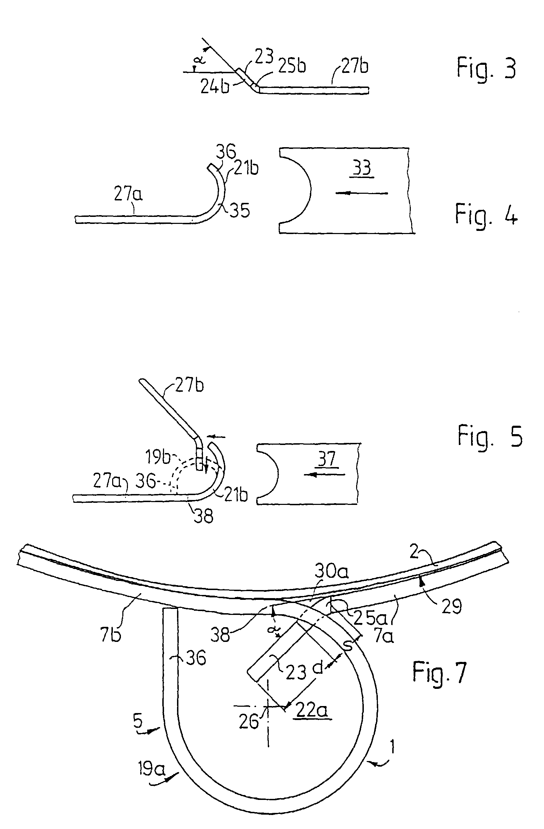

Damit im zusammengeklappten Zustand die im Schwenkscharnier **5** einander benachbarten Innenwände der Rohrschellenrestteile eine stetige Kurvenoberfläche bilden, d. h. gut auf dem Mantel **29** des zu haltenden Rohrs **2** aufliegen, darf die zweite Toleranz nicht zu klein gegenüber der Blechdicke gewählt werden. Das gute Aufliegen wird ferner durch ein Abbiegen des Querstücks **23** zwischen 30° und 70°, bevorzugt zwischen 35° und 55°, insbesondere etwa um 45° gegenüber der an ihn anschließenden Innenwand des Rohrschellenrestteils nach außen erreicht. Das satte Aufliegen der Innenseiten der Schellenbacken **7a** und **7b** auf dem Rohrmantel **29** ist im kritischen Bereich des Schwenkscharniers 5 in **Figur 7** dargestellt. Die Rohrschellenbackeninnenseiten beider Backen **7a** und **7b** liegen nahezu vollständig auf dem gesamten Rohrmantel **29** satt auf. Ausnahmen vom satten Aufliegen sind lediglich ein erster kleiner Bereich **30a** im Abknickbereich der beiden flanschartigen Teile **10a** und **10b** sowie deren gegenseitigem Abstand, der zum Spannen und zum Ausgleich von Fertigungstoleranzen benötigt wird. Ein zweiter, winziger Bereich 30b befindet sich unmittelbar im Abknickbereich der Laschen **21a** und **21b** sowie des Querstücks **23.** Die Summe beider Bereiche **30a** und **30b** hängt vom Durchmesser des Rohrs **2** ab. Sie liegt im Bereich von lediglich 10% des Rohrumfangs. Im Gegensatz zu den bekannten Rohrhaltern **1** liegt der erfindungsgemäße Rohrhalter ausgezeichnet auf dem Rohrmantel **29** auf. Klemmkeile werden nicht mehr benötigt.

Zur Herstellung des erfindungsgemäßen Rohrhalters **1** wird von zwei, bevorzugt gleich dicken und gleich breiten Blechstreifen **27a** und **27b** ausgegangen. Diese beiden Blechstreifen **27a** und **27b** ergeben nach dem hier beschriebenen Biegevorgang die beiden Rohrschellenbacken **7a** und **7b.** Das eine Ende des Blechstreifens **27a** wird, wie in **Figur 2** dargestellt, derart ausgestanzt, daß zwei seitliche Laschen **21a** und **21b** stehen bleiben. In das eine Ende des zweiten Blechstreifens **27b** werden zwei seitliche, miteinander fluchtende Schlitze **25a** und **25b** senkrecht zur Längsausdehnung des Blechstreifens **27b** eingestanzt. Die Breite **s** der Schlitze **25a** und **25b** ist um eine Toleranz größer als die Blechdicke des Blechstreifens **27a** gemäß obiger Ausführung betreffend der zweiten Toleranz. Die Schlitzlänge beträgt bevorzugt ein Viertel der Blechbreite. Der durch die Schlitze **25a** und **25b** gebildete T-förmige Endbereich als Querstück **23** hat in Längsrichtung des Blechstreifens **27b** eine Ausdehnung **d**, welche kleiner ist als die Laschenlänge dividiert durch den Wert π. D. h., der Durchmesser der Innenräume **22a** und **22b** der später zu einem Zylinder gebogenen Laschen **21a** und **21b** sollte um eine große Toleranz größer sein als die Ausdehnung **d**.

In einem nächsten Verfahrensschritt wird nun, gemäß **Figur 3**, das Querstück **23** entlang einer die Schlitzlängsseiten verbindenden, dem Querstück **23** abgewandten Linie **31** unter etwa 45° nach oben gebogen. Gemäß **Figur 4** werden anschließend mit einem eine runde Einbuchtung aufweisenden Formstück **33** die beiden Laschen **21a** und **21b** zu einem knappen Halbkreis **35** mit einem annähernd geraden Endstück **36** hochgebogen. In einem nun folgenden weiteren Verfahrensschritt werden die beiden vorgebogenen Blechstreifen **27a** und **27b**, wie in **Figur 5** skizziert, zusammengesteckt, d. h. die vorgebogenen Laschen **21a** und **21b** werden durch die beiden Schlitze **25a** und **25b** gesteckt. Mit einem weiteren Formstück **37** werden nun die beiden Laschen **21a** und **21b** zu einem geschlossenen Zylinder, der den beiden Endbereichen **19a** und **19b** entspricht, gebogen. Unter Vernachlässigung einer vollständigen Kreiskontur steht nun, wie **Fig. 7** vergrößert zeigt, das Endstück **36** grob angenähert senkrecht auf der Backenaußenseite. Auch erstrecken sich die Laschen **21a** und **21b** annähernd gerade (tangential) über das Bodenstück **38** in die Endbereiche **19a** und **19b** hinein. Diese Ausformung ergibt einen ausgezeichneten Schwenkverlauf ohne jegliche Verhakungs- und Verklemmungsanfälligkeit. Das Schwenkscharnier **5** ist fertig. Anschließend werden die beiden flanschartigen Teile **10a** und **10b** mit den Ausstanzungen sowie Gewinde für die Ringschraube **9** und die halbrunde Form der Rohrschellenbacken **7a** und **7b** gebogen.

Anstatt ein Schwenkscharnier **5** aus den beiden seitlichen, durch die Schlitze **25a** und **25b** greifenden Laschen **21a** und **21b** unter Verwendung des T-förmigen Endbereichs **23** als Gegenhalteteil **23** zu bilden, kann auch wie in **Figur 6** angedeutet verfahren werden. Hier weist eine mit **41a** bezeichnete Rohrschellenbacke an ihrem freien Ende eine mittige Lasche **42** auf. Die andere Rohrschellenbacke, hier mit **41b** bezeichnet, weist einen zur Breite der Lasche **42** mit einer Spieltoleranz versehenen Schlitz **43** auf. Der Schlitz **43** ist derart angeordnet, daß bei eingesteckter Lasche **42** die beiden Rohrschellenbacken **41a** und **41b** fluchten. Der Abstand d des Schlitzes **43** vom freien Ende ist um eine Toleranz kleiner als die durch den Wert α dividierte Länge **1** der Lasche **42.** Für die Toleranz gelten die oben gemachten Angaben für die in **Figur 2** dargestellte Ausführungsart.

Gegenüber den in den **Figuren 2** und **6** aufgezeigten Ausführungsarten können auch noch andere Anordnungen der Laschen und Schlitze verwendet werden. Die Laschen sind nur zueinander parallel in Verlängerung der Längsausdehnung der Rohrschellenbacken auszubilden und die Schlitze passend zu den Laschen.

Anstatt die beiden Rohrschellenbacken halbkreisförmig zu biegen, können selbstverständlich auch andere Formen gebogen werden. Auch können anstelle des einen Schwenkscharniers mehrere verwendet werden.

Das hier beschriebene Schwenkscharnier ist nicht nur bei Rohrhaltern für Dachablaufrohre 2 zu verwenden; es kann auch für andere Einsatzgebiete hergenommen werden. Geeignet sind insbesondere Scharniere im Zusammenhang mit aus Blech gebogenen Teilen, da hier besonders einfach die oben beschriebenen Stanzarbeiten für die Laschen und Schlitze ausgeführt werden können. Zusätzliche Anwendungsbereiche sind z. B. die Haustechnik (Sanitär-, Heizungsrohrbefestigungen, ...), Bautechnik etc.; auch können Scharniere an Blechschachteln, wie oben beschrieben, derart ausgebildet werden.

## Patentansprüche

1. Rohrhalter (**1**), insbesondere für die Halterung von Dachablaufrohren (**2**), mit zwei aus Blech gebogenen Schellenbacken (**7a, 7b**), deren benachbarte, untrennbar miteinander verbundene Endbereiche (**19a, 19b, 23**) ein angeformtes Schwenkschamier (**5**) bilden, wobei im ersten Endbereich (**19a, 19b**) der ersten Backe (**7b**) wenigstens eine Lasche (**19, 19b**) - einen Freiraum (**22a, 22b**) möglichst vollständig umschließend - umgebogen ist und im zweiten Endbereich der zweiten Backe wenigstens ein Gegenhalteteil (**23**) gegenüber dem anschließenden Schellenbackenrestteil nach außen um einen Winkel (α) zwischen 30° und 70°, bevorzugt um einen Winkel (α) zwischen 35° und 55° gebogen ist und dieser (**23**) durch wenigstens einen Schlitz (25a, **25b; 43**) vom restlichen Backenteil abgesondert in jedem Freiraum (**22a, 22b**) liegt, **dadurch gekennzeichnet,** daß die Schlitzbreite (s) jedes den Gegenhalteteil (**23**) vom restlichen Backenteil absondernden Schlitzes (**25a, 25b; 43**) lediglich um eine geringfügige erste Toleranz größer ist als die Blechstärke der eingebogenen Lasche (**21a, 21b**) und die Breite (**d**) des Gegenhalteteils (**23**) immer wesentlich kleiner ist als der Durchmesser jedes Freiraums (**22a, 22b**), damit der Schwenkvorgang ohne Berührung der freien Stirnseite des Gegenhalteteils (**23**) bzw. der Gegenhalteteile (**23**) mit der eingebogenen Lascheninnenwandung und demzufolge nur durch Rutschen der Laschenwandung (**21a, 21b**) im Schlitz (**25a, 25b; 43**) erfolgt, d.h. das Schwenkscharnier (**5**) ist frei von jeglichem, eine mechanische Achsenfunktion nachempfindenden Element ausgebildet, wodurch im geschlossenen Zustand des Rohrhalters (**1**) ein dessen Querschnitt entsprechendes Rohr (**2**) paßgenau und insbesondere optisch ansprechend ohne zwischen der Schellenbackeninnenseite und dem Rohrmantel (**29**) einbringbarem Zusatzelement halterbar und einklemmbar ist.

2. Rohrhalter (1) nach Anspruch 1, **dadurch gekennzeichnet,** daß die Abbiegung des Gegenhalteteils (**23**) an der dem Schellenbackenrestteil benachbarten Schlitzseite (**31**) beginnt.

3. Rohrhalter (**1**) nach einem der Ansprüche 1 oder 2, dadurch gekennzeichnet, daß der Abbiegewinkel (α) und die Schlitzbreite (**s**) am Gegenhalteteil (**23**) derart gewählt sind, daß die anschließenden Backenrestteile im geschlossenen Zustand annähernd eine stetige Kurvenoberfläche bilden, damit ein sattes Anliegen an der Dachablaufrohrmantelfläche (**29**) möglich ist.

4. Rohrhalter (**1**) nach einem der Ansprüche 1 bis 3, **dadurch gekennzeichnet,** daß der bzw. die Schlitze (**25a, 25b**) parallel zur geometrischen Scharnierachse (**26**) verläuft bzw. verlaufen.

5. Rohrhalter (**1**) nach einem der Ansprüche 1 bis 4, **dadurch gekennzeichnet,** daß jeder Freiraum (**22a, 22b**) einen annähernd geraden Bodenbereich (**38**) hat, über dem jedes Laschenende geschlossen bis zur Auflage bzw. nahezu Auflage auf der Backenoberseite gebogen ist.

6. Verfahren zur Herstellung des Rohrhalters (**1**) nach einem der Ansprüche 1 bis 5, wobei zur Herstellung des Schwenkscharniers (**5**) für die beiden Rohrschellenbacken (**7a, 7b**) wenigstens eine zur Backenlängsrichtung parallele Seiten aufweisende Lasche (**21a, 21b**) im Endbereich einer der beiden Backen (**7a, 7b**) herausgearbeitet wird, ein Gegenhalteteil (**23**) im Endbereich der anderen Backe (**7a**) durch Herausarbeiten wenigstens eines senkrecht zur Backenlängsrichtung verlaufenden Querschlitzes (**25a, 25b**) mit einer Schlitzbreite (**s**), welche lediglich um eine kleine Toleranz, insbesondere eine Spieltoleranz größer ist als die Blechstärke der Laschen, erzeugt wird, und der Querschlitz (**25a, 25b**) einen Abstand (**d**) vom benachbarten Rohrschellenbackenende hat, anschließend der Gegenhalteteil (**23**) nach außen um einen Winkel (α) zwischen 30° und 70°, bevorzugt um einem Winkel (α) zwischen 35° und 55° aufgebogen wird, und dann jede Lasche (**21a, 21b**) zu einer annähernd geschlossenen, auf der Backenoberseite aufliegenden Form derart um jeden Gegenhalteteil (**23**) aufgerollt wird, daß der Gegenhalteteil (**23**) mit den Laschen (**21a, 21b**) untrennbar verbunden ist und der die Breite des Gegenhalteteils (**23**) definierende Abstand (**d**) des Querschlitzes (**25a, 25b**) in Zusammenhang mit der Laschenlänge (**I**), welche den Durchmesser eines durch das Umbiegen der Laschen (**21a, 21b**) gebildeten Freiraums (**22a, 22b**) definiert, derart aufeinander abgestimmt werden, daß die Breite (**d**) des Gegenhalteteils (**23**) immer wesentlich kleiner ist als der Durchmesser jedes Freiraums (**22a, 22b**), um bei der Schwenkschamierbewegung nur ein Rutschen der Freiraumwand im Querschlitz (**25a, 25b**) ohne mechanische Achsenfunktion zu erhalten, was hier bei diesem bolzenfreien Scharnier einen verhakungsfreien Schwenkvorgang ermöglicht.

7. Verfahren nach Anspruch 6, **dadurch gekennzeichnet,** daß jedes Laschenende beim Aufrollvorgang unter Vernachlässigung einer Kreiskontur derart gebogen wird, daß es annähernd senkrecht auf der Backenoberfläche aufsteht.

8. Verfahren nach Anspruch 7, **dadurch gekennzeichnet,** daß das annähernd letzte Viertel (**36**) und insbesondere das erste Viertel (**38**) der gebogenen Laschenkontur unter Vernachlässigung einer annähernden Kreiskontur in einem angenähert geraden Verlauf gebogen wird bzw. werden.

## Claims

1. Pipe holder (1), in particular for holding roof downpipes (2), having two clamp jaws (7a, 7b) which are bent out of sheet metal and whose adjacent end regions (19a, 19b, 23), which are inseparably connected to one another, constitute an integrally formed pivot hinge (5), at least one bracket (19, 19b) - surrounding as completely as possible a free space (22a, 22b) - being bent over in the first end region (19a, 19b) of the first jaw (7b) and at least one counter holding element (23) being bent, in the second end region of the second jaw, outwards at an angle (α) of between 30° and 70°, preferably at an angle (α) of between 35° and 55°, relative to the adjoining remaining portion of the clamp jaws, and the counter holding element (23) being arranged in each free space (22a, 22b), separated by at least one slot (25a, 25b; 43) from the remaining portion of the jaws, characterised in that the slot width (s) of each slot (25a, 25b; 43) that separates the counter holding element (23) from the remaining portion of the jaws is greater merely by a slight first tolerance than the sheet metal thickness of the bent-in bracket (21a, 21b) and the width (d) of the counter holding element (23) is always substantially smaller than the diameter of each free space (22a, 22b) so that the pivot process is effected without contact between the free end face of the counter holding element(s) (23) and the bent-in inner wall of the bracket and, consequently, merely by sliding of the bracket wall (21a, 21b) in the slot (25a, 25b; 43), that is, the pivot hinge (5) is formed free from any element which has a mechanical axis function, whereby, in the closed state of the pipe holder (1), a pipe (2) which corresponds to the cross-section thereof can be held and clamped in an accurately fitting and, in particular, visually appealing manner without an additional element insertable between the inner side of the clamp jaws and the outer side (29) of the pipe.

2. Pipe holder (1) according to claim 1, characterised in that the bending-over of the counter holding element (23) begins at the slot side (31) adjacent to the remaining portion of the clamp jaws.

3. Pipe holder (1) according to either claim 1 or claim 2, characterised in that the bent-over angle (a) and the slot width (s) are selected on the counter holding element (23) such that the adjoining remaining portions of the jaws form, in the closed state, approximately a continuous curved surface so that a close abutment on the outer face of the roof downpipe (29) is possible.

4. Pipe holder (1) according to any one of claims 1 to 3, characterised in that the slot(s) (25a, 25b) extend(s) parallel with the geometric hinge axis (26).

5. Pipe holder (1) according to any one of claims 1 to 4, characterised in that each free space (22a, 22b) has an approximately straight base region (38), above which each bracket end is bent closed until resting or almost resting on the top of the jaws.

6. Method for the manufacture of the pipe holder (1) according to any one of claims 1 to 5, wherein, for the manufacture of the pivot hinge (5) for the two clamp jaws (7a, 7b), at least one bracket (21a, 21b), which has sides parallel with the longitudinal direction of the jaws, is worked out in the end region of one of the two jaws (7a, 7b), a counter holding element (23) is produced in the end region of the other jaw (7a) by working out at least one transverse slot (25a, 25b) which extends perpendicularly to the longitudinal direction of the jaws and which has a slot width (s) greater by a small tolerance, in particular a clearance tolerance, than the sheet metal thickness of the brackets, and the transverse slot (25a, 25b) has spacing (d) from the adjacent end of the pipe clamp jaws, the counter holding element (23) is subsequently bent open in an outward direction by an angle (a) of between 30° and 70°, preferably by an angle (a) of between 35° and 55°, and then each bracket (21a, 21b) is rolled up round each counter holding element (23) to form an approximately closed shape lying on the top of the jaws, in such a manner that the counter holding element (23) is connected inseparably to the brackets (21a, 21b) and the spacing (d), which defines the width of the counter holding element (23), of the transverse slot (25a, 25b) and the bracket length (1), which defines the diameter of a free space (22a, 22b) formed by bending over the brackets (21a, 21b), are co-ordinated with one another such that the width (d) of the counter holding element (23) is always substantially smaller than the diameter of each free space (22a, 22b) in order, when the pivot hinge moves, to obtain merely sliding of the free space wall in the transverse slot (25a, 25b) without a mechanical axis function, which allows a catch-free pivot process with that pin-free hinge.

7. Method according to claim 6, characterised in that each bracket end is bent in the rolling-up process, without completely forming a circular contour, such that it stands approximately perpendicularly on the surface of the jaws.

8. Method according to claim 7, characterised in that the approximately last quarter (36) and, in particular, the first quarter (38) of the bent contour of the bracket is/are bent in an approximately straight progression, without completely forming an approximate circular contour.

## Revendications

1. Support de tuyau (1), en particulier pour retenir des tuyaux d'écoulement des eaux pluviales (2), comportant deux mâchoires de collier (7a, 7b) cintrées en tôle, dont les zones d'extrémité (19a, 19b, 23) voisines reliées l'une à l'autre de façon inséparable forment une charnière de pivotement conformée (5), dans lequel est prévue, dans la première zone d'extrémité (19a, 19b) de la première mâchoire (7b), au moins une patte (19, 19b) qui est cintrée de manière à entourer le plus complètement possible un intervalle (22a, 22b), et il est prévu dans la seconde zone d'extrémité de la seconde mâchoire au moins un élément de contre-maintien (23) cintré vers l'extérieur par rapport à la partie restante de la mâchoire de collier qui s'y raccorde sur un angle (a) de 30° à 70°, de préférence sur un angle (a) de 35° à 55°, et celui-ci (23) se trouve dans chaque intervalle (22a, 22b) de façon séparée par au moins une fente (25a, 25b ; 43) vis-à-vis de la partie restante de la mâchoire, caractérisé en ce que la largeur (s) de chaque fente (25a, 25b ; 43) séparant l'élément de contre-maintien (23) vis-à-vis de la partie restante de la mâchoire est supérieure, seulement d'une première tolérance faible, à l'épaisseur de la tôle de la patte cintrée (2 la, 21b), et la largeur (d) de l'élément de contre-maintien (23) est toujours sensiblement inférieure au diamètre de chaque intervalle (22a, 22b), pour que l'opération de pivotement se fasse sans que la face frontale libre de l'élément de contre-maintien (23) ou des éléments de contre-maintien (23) vienne toucher la paroi intérieure cintrée de la patte et se fasse par conséquent uniquement par glissement de la paroi de patte (2 la, 21b) dans la fente (25a, 25b ; 43), c'est-à-dire que la charnière de pivotement (5) est réalisée de façon exempte de tout élément représentant une fonction d'axe mécanique, ce pourquoi dans l'état fermé du support de tuyau (1), un tuyau (2) correspondant à sa section transversale peut être retenu et serré avec ajustement exact et en particulier avec un aspect esthétique, sans prévoir d'élément supplémentaire à introduire entre la face intérieure de la mâchoire de collier et l'enveloppe (29) du tuyau.

2. Support de tuyau (1) selon la revendication 1, caractérisé en ce que la courbure de l'élément de contre-maintien (23) commence sur le côté de fente (31) voisin de la partie restante de la mâchoire de collier.

3. Support de tuyau (1) selon l'une ou l'autre des revendications 1 et 2, caractérisé en ce que l'angle de courbure (α) et la largeur de fente (s) sur l'élément de contre-maintien (23) sont ainsi choisis que les parties restantes de la mâchoire qui s'y raccordent forment dans l'état fermé approximativement une surface recourbée continue, pour qu'un appui net contre la surface enveloppe (29) du tuyau d'écoulement des eaux pluviales soit possible.

4. Support de tuyau (1) selon l'une quelconque des revendications 1 à3, caractérisé en ce que la ou les fentes (25a, 25b) s'étend(ent) parallèlement à l'axe de charnière géométrique (26).

5. Support de tuyau (1) selon l'une quelconque des revendications 1 à 4, caractérisé en ce que chaque intervalle (22a, 22b) comprend une zone de fond (38) approximativement rectiligne au-dessus de laquelle chaque extrémité de patte est recourbée de façon refermée jusqu'à l'appui ou approximativement jusqu'à l'appui sur la face supérieure de la mâchoire.

6. Procédé pour réaliser un support de tuyau (1) selon l'une quelconque des revendications 1 à 5, dans lequel, pour réaliser la charnière de pivotement (5) pour les deux mâchoires de collier de tuyau (7a, 7b), on découpe dans la zone d'extrémité de l'une des deux mâchoires (7a, 7b) au moins une patte (21a, 21b) présentant des faces parallèles à la direction longitudinale de mâchoire, on réalise un élément de contre-maintien (23) dans la zone d'extrémité de l'autre mâchoire (7a) par découpe d'au moins une fente transversale (25a, 25b) qui s'étend perpendiculairement à la direction longitudinale de mâchoire et qui présente une largeur (s) qui est supérieure, seulement d'une petite tolérance, en particulier une tolérance formant jeu, à l'épaisseur de tôle des pattes, la fente transversale (25a, 25b) présentant une distance (d) depuis l'extrémité de mâchoire de collier de tuyau voisine, ensuite on cintre l'élément de contre-maintien (23) vers l'extérieur d'un angle (a) entre 30° et 70°, de préférence d'un angle (a) entre 35° et 55°, et ensuite on enroule chaque patte (21a, 21b) autour de chaque élément de contre-maintien (23) pour obtenir une forme approximativement refermée s'appuyant sur la face supérieure de la mâchoire, de telle sorte que l'élément de contre-maintien (23) est relié de façon inséparable aux pattes (21a, 21b), et la distance (d), définissant la largeur de l'élément de contre-maintien (23), de la fente transversale (25a, 25b) et la longueur de patte (I) qui définit le diamètre d'un intervalle (22a, 22b) formé par cintrage des pattes (21a, 21b) sont accordées l'une à l'autre de telle sorte que la largeur (d) de l'élément de contre-maintien (23) est toujours sensiblement inférieure au diamètre de chaque intervalle (22a, 22b), afin d'obtenir seulement un glissement de la paroi d'intervalle dans la fente transversale (25a, 25b) sans fonction d'axe mécanique lors du mouvement de la charnière de pivotement, ce qui permet ici, pour cette charnière exempte de goujons, une opération de pivotement sans accrochage.

7. Procédé selon la revendication 6, caractérisé en ce que l'on cintre chaque extrémité de patte après l'opération d'enroulement en omettant un contour circulaire, de telle sorte qu'elle se redresse approximativement perpendiculairement sur la surface de la mâchoire.

8. Procédé selon la revendication 7, caractérisé en ce que l'on cintre approximativement le dernier quart (36) et en particulier le premier quart (38) du contour de patte cintré, en omettant un contour approximativement circulaire de manière à obtenir un tracé approximativement rectiligne.
